# EUROPEAN PATENT SPECIFICATION

(11) **EP 2 789 817 B1**
(45) Date of publication and mention of the grant of the patent: **27.12.2017**
(21) Application number: 12856544.7
(22) Date of filing: 08.11.2012
(51) Int. Cl.: F01N 3/08, F01N 3/20, F01N 13/08, F01N 13/14, F01N 13/16, B23K 9/00, B23K 9/025, B23K 9/028, B23K 9/167

(54) **EXHAUST PURIFICATION DEVICE AND METHOD FOR INCREASING CORROSION RESISTANCE OF EXHAUST PURIFICATION DEVICE**
ABGASREINIGUNGSVORRICHTUNG UND VERFAHREN ZUR ERHÖHUNG DER KORROSIONSBESTÄNDIGKEIT EINER ABGASREINIGUNGSVORRICHTUNG
DISPOSITIF D'ÉPURATION DES GAZ D'ÉCHAPPEMENT ET PROCÉDÉ DESTINÉ À AUGMENTER LA RÉSISTANCE À LA CORROSION D'UN DISPOSITIF D'ÉPURATION DES GAZ D'ÉCHAPPEMENT

(30) Priority: 06.12.2011 JP 2011266472
(43) Date of publication of application: 15.10.2014
(73) Proprietor: UD Trucks Corporation, Saitama 362-8523 (JP)
(72) Inventor: SUGIYAMA, Satoshi, Ageo-shi Saitama 362-8523 (JP)
(74) Representative: Grünecker Patent- und Rechtsanwälte PartG mbB
(86) International application number: PCT/JP2012/078937
(87) International publication number: WO 2013/084652

(56) References cited:
- EP-A1- 1 890 015
- DE-A1-102009 041 592
- JP-A- 2005 226 528
- JP-A- 2009 127 463
- JP-A- 2010 031 718

## Description

### TECHNICAL FIELD

The present invention relates to an exhaust gas purification apparatus that selectively reduces and purifies nitrogen oxide (NOx) contained in exhaust gas of an engine and relates to a method for increasing corrosion resistance of the exhaust gas purification apparatus.

### BACKGROUND ART

As a catalytic purification system for removing NOx contained in exhaust gas of an engine, an exhaust gas purification apparatus disclosed in Japanese Laid-open Patent Application Publication No. 2005-226528 (Patent Document 1) has been proposed. Such an exhaust gas purification apparatus supplies by injection a liquid reducing agent or a precursor thereof according to an engine operation state on the exhaust gas upstream side of a selective catalytic reduction (SCR) converter, which is disposed in an exhaust pipe, to thereby selectively cause a reduction reaction between NOx and the reducing agent in the SCR converter, so that the NOx is purified into harmless components. Furthermore, in such an exhaust gas purification apparatus, a double-pipe structure including an inner pipe and an outer pipe is applied to the exhaust pipe, in which the liquid reducing agent or the precursor thereof is supplied by injection, to prevent the reducing agent or the precursor thereof from being cooled and deposited.

### CITATION LIST

### PATENT DOCUMENT

Patent Document 1: Japanese Laid-open Patent Application Publication No. 2005-226528

### SUMMARY OF THE INVENTION

### PROBLEMS TO BE SOLVED BY THE INVENTION

In an exhaust gas purification apparatus mounted on a vehicle, a urea aqueous solution that has advantages in safety and ease of handling may be used as a precursor of a liquid reducing agent. In this case, exhaust gas, in which the urea aqueous solution is mixed, not only passes through an inner pipe of a double-pipe structure, but also passes between the inner pipe and an outer pipe. Since an outer peripheral surface of the outer pipe is exposed to outer air, a temperature in the outer pipe may be easily decreased to a low temperature, compared to that in the inner pipe. Furthermore, when the temperature in the outer pipe becomes less than approximately 200 °C in accordance with an engine operation state or the like, droplets of the urea aqueous solution adhering to an inner peripheral surface of the outer pipe generate biuret while generating ammonia, and thus, the biuret may be deposited on the inner peripheral surface of the outer pipe. The biuret deposited on the inner peripheral surface of the outer pipe generates cyanuric acid and ammonia when a temperature of the exhaust gas increases according to a change in engine operation state. Ammonia is corrosive on metals, and accordingly, when a concentration thereof locally increases, the outer pipe, particularly a welded portion made thereon, may be corroded. In addition, the corrosion of the outer pipe may occur not only by the biuret, but by any precipitate derived from urea.

Thus, an object of the present invention is to provide an exhaust gas purification apparatus, in which an outer pipe has an improved corrosion resistance, and a method for increasing corrosion resistance of the exhaust gas purification apparatus.

### MEANS FOR SOLVING THE PROBLEMS

The exhaust gas purification apparatus includes: an SCR converter which is disposed in an exhaust pipe of an engine and that selectively reduces and purifies nitrogen oxide contained in exhaust gas upon being supplied with ammonia generated from a urea aqueous solution; and an injection nozzle that supplies by injection the urea aqueous solution on an exhaust gas upstream side of the SCR converter. At least a part of the exhaust pipe located between the injection nozzle and the SCR converter has a double-pipe structure including an inner pipe and an outer pipe, each of which has a welded portion, and the welded portion of the outer pipe is produced by welding performed from an inside of the outer pipe.

### EFFECT OF THE INVENTION

In the exhaust pipe having the double-pipe structure including the inner pipe and the outer pipe, since the outer pipe is welded from the inside of the outer pipe, grain boundaries of the welded portion can be fine on an inner peripheral surface and can be coarse on an outer peripheral surface. Thus, since the grain boundaries of the welded portion on the inner peripheral surface of the outer pipe are made finer, an atomic arrangement can be put in order, and accordingly, corrosion resistance of the inner peripheral surface, that may be exposed to ammonia, can be improved, so that occurrence of corrosion can be reduced.

### BRIEF DESCRIPTION OF THE DRAWINGS

FIG. 1 is a plan view illustrating an example of an exhaust gas purification apparatus;
FIG. 2 is a perspective view illustrating the example of the exhaust gas purification apparatus;
FIG. 3 is an explanatory view illustrating the inside of the example of the exhaust gas purification apparatus;
FIG. 4 is a cross-sectional view of an exhaust pipe having a double-pipe structure including an inner pipe and an outer pipe;
FIG. 5 is an enlarged view of an X portion of FIG. 4 and an explanatory view illustrating a state of grain boundaries of welded portions when the outer pipe is welded from the outside thereof;
FIG. 6 is an enlarged view of the X portion of FIG. 4 and an explanatory view illustrating a state of grain boundaries of the welded portions when the outer pipe is welded from the inside thereof; and
FIG. 7 is an explanatory view illustrating the inside of another example of the exhaust gas purification apparatus.

### MODE FOR CARRYING OUT THE INVENTION

Hereinbelow, embodiments for carrying out the present invention will be described with reference to the accompanying drawings.

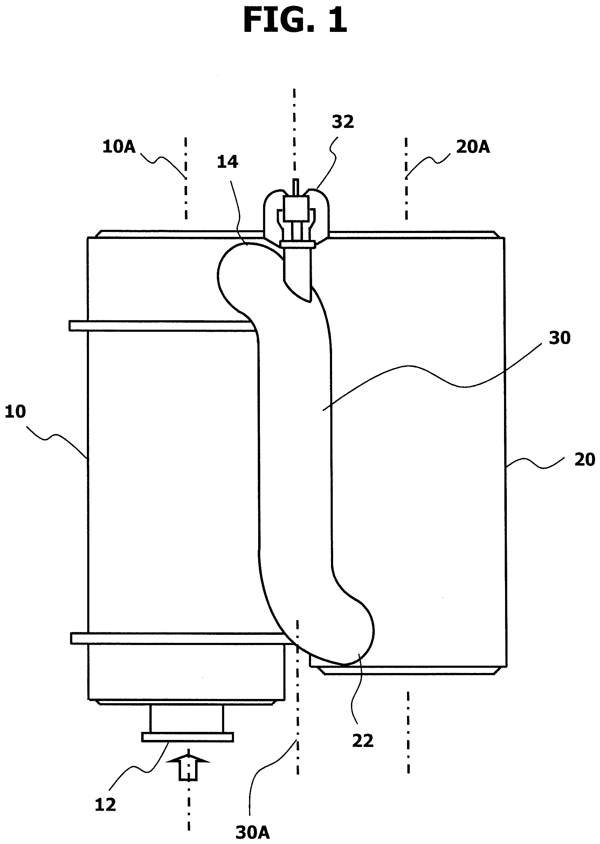

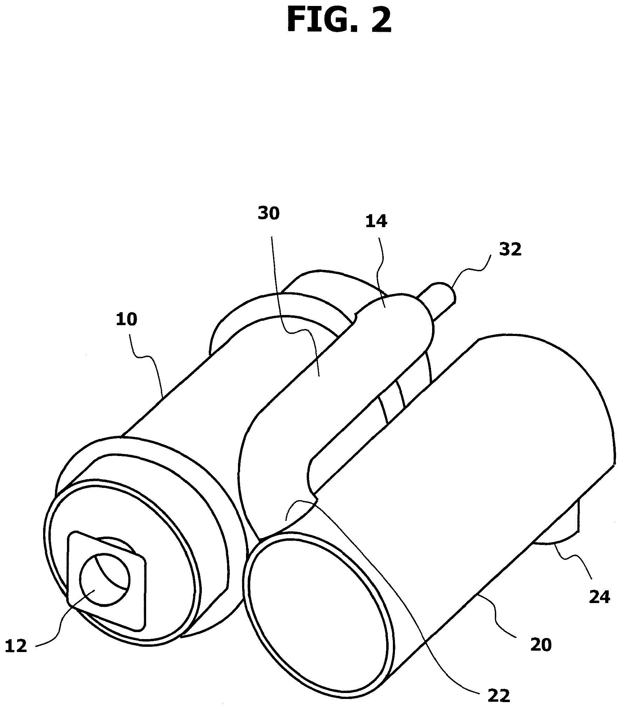

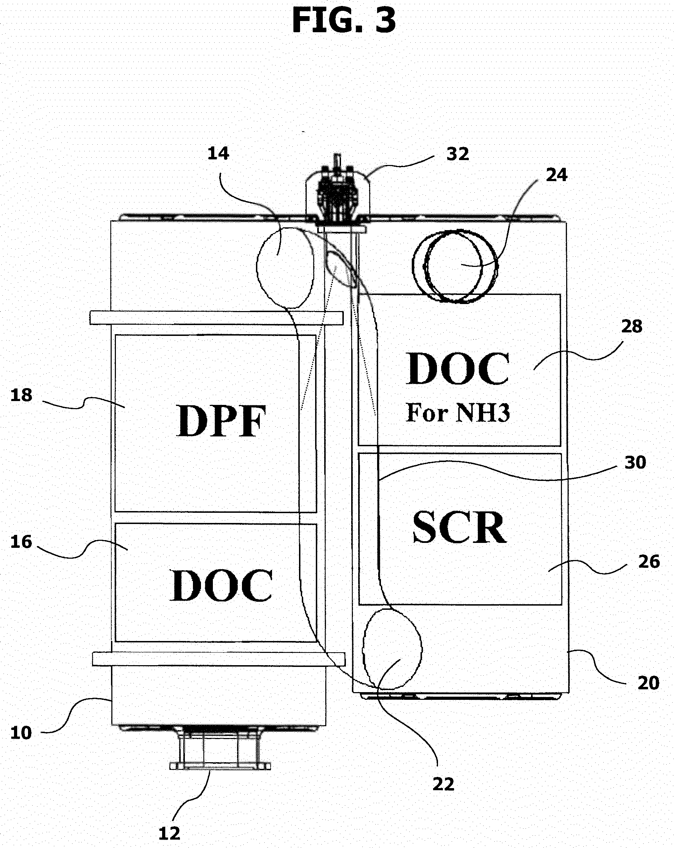

FIGS. 1 to 3 illustrate an example of an exhaust gas purification apparatus.

The exhaust gas purification apparatus includes a first casing 10 having a tubular shape, a second casing 20, which also has a tubular shape, and a communication pipe 30 by which far-end portions of the first casing 10 and the second casing 20 communicate with each other. The first casing 10 and the second casing 20 are arranged to be close to each other in a manner such that an axis 10A thereof and an axis 20A thereof are arranged to be substantially parallel to each other (as used herein, "parallel" may be confirmed by measuring with the eye). In addition, the communication pipe 30 is also arranged in a manner such that an axis 30A thereof is substantially parallel to the axis 10A of the first casing 10 and the axis 20A of the second casing 20. Here, the first casing 10, the second casing 20 and the communication pipe 30 correspond to a part of an exhaust pipe of an engine.

The first casing 10 is provided with an inlet 12 formed on an exhaust gas upstream end thereof and an outlet 14 formed on an exhaust gas downstream end thereof. In the present embodiment, the inlet 12 is formed on an end face of the exhaust gas upstream end, and the outlet 14 is formed on a side face of the exhaust gas downstream end. Furthermore, between the inlet 12 and the outlet 14, a diesel oxidation catalytic (DOC) converter 16 that oxidizes at least NO (nitrogen monoxide) to NO₂ (nitrogen dioxide), and a diesel particulate filter (hereinbelow, referred to as "DPF") 18 that collects and removes particulate matter (PM) are disposed in a manner such that the DOC converter 16 is arranged on the exhaust gas upstream side of the DPF 18.

The second casing 20 is provided with an inlet 22 formed on an exhaust gas upstream end thereof and an outlet 24 formed on an exhaust gas downstream end thereof. In the present embodiment, both of the inlet 22 and the outlet 24 are formed on side faces of the ends. Furthermore, between the inlet 22 and the outlet 24, an SCR converter 26 that selectively reduces and purifies NOx using ammonia as a reducing agent, and an oxidation catalytic converter 28 that oxidizes ammonia which has been passed through the SCR converter 26 are disposed in a manner such that the SCR converter 26 is arranged on the exhaust gas upstream side of the oxidation catalytic converter 28.

The communication pipe 30 communicates far-end portions of the first casing 10 and the second casing 20 with each other, that is, communicates the outlet 14 of the exhaust gas downstream end of the first casing 10 with the inlet 22 of the exhaust gas upstream end of the second casing 20, which are the end portions located opposite to and far from each other. Thus, exhaust gas of the engine flows into the first casing 10 via the inlet 12, and passes through the DOC converter 16 and the DPF 18, and then, enters the communication pipe 30 via the outlet 14. Then, through the communication pipe 30, the exhaust gas flows into the second casing 20 via the inlet 22, and then, the exhaust gas is discharged from the outlet 24, passing through the SCR converter 26 and the oxidation catalytic converter 28. That is, a passage of the exhaust gas from the first casing 10 to the second casing 20 through the communication pipe 30 is made to turn once by the communication pipe 30.

Furthermore, the communication pipe 30 is a linearly formed straight pipe, both ends of which are formed to be bent portions for connecting the communication pipe 30 to the outlet 14 of the first casing 10 and the inlet 22 of the second casing 20. To the bent portion for the outlet 14, an injection nozzle 32 is attached, to supply by injection a urea aqueous solution toward an inside of the straight portion of the pipe. Thus, a length of the straight portion required to uniformly diffusing the urea aqueous solution in the exhaust gas can be obtained. Here, to facilitate the uniform diffusion of the urea aqueous solution, for example, a diffusing member in a mesh shape or the like may be disposed in the communication pipe 30.

According to such an exhaust gas purification apparatus, since the first casing 10 and the second casing 20 are arranged to be close and in parallel to each other, the outline thereof can be as small in size as a box-shaped muffler. Furthermore, since the communication pipe 30 communicates the far-end portions of the first casing 10 and the second casing 20 with each other, the pipe length required to uniformly diffuse the urea aqueous solution can be obtained, and the communication pipe 30 can be placed within the outline defined by the first casing 10 and the second casing 20, so that reduction in size in a direction from the exhaust gas upstream side to the exhaust gas downstream side can be achieved.

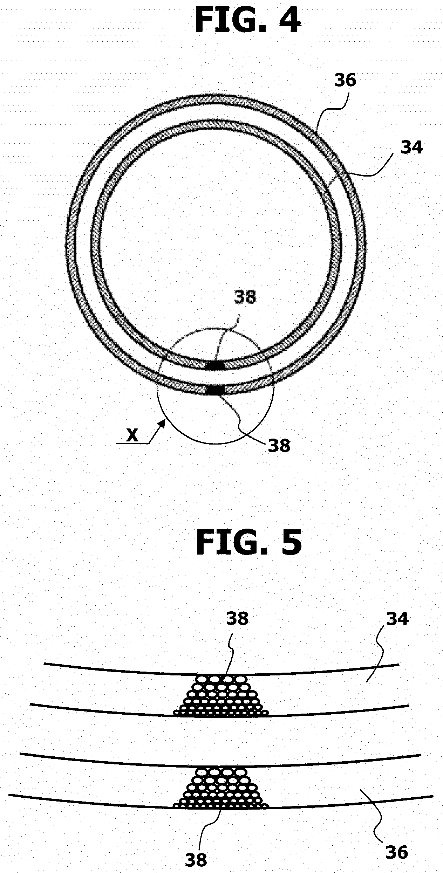

The straight portion of the communication pipe 30 extending between the bent portions, that is, at least a part of the exhaust pipe located between the injection nozzle 32 and the SCR converter 26 has a double-pipe structure, in which an inner pipe 34 and an outer pipe 36 are concentrically arranged, as illustrated in FIG. 4, in order to improve a heat retaining property of the communication pipe 30 and to facilitate hydrolysis of the urea aqueous solution supplied by injection from the injection nozzle 32, for example. In this case, when exhaust gas mixed with the urea aqueous solution passes between the inner pipe 34 and the outer pipe 36, a temperature thereof may be decreased since an outer peripheral surface of the outer pipe 36 is exposed to outside air, so that droplets of the urea aqueous solution adhering to an inner peripheral surface of the outer pipe 36 may form precipitates derived from urea, such as biuret, and may be deposited thereon. Then, when the temperature of exhaust gas passing between the inner pipe 34 and the outer pipe 36 increases, the precipitates deposited on the inner peripheral surface of the outer pipe 36 locally generate ammonia at high concentration.

Furthermore, each of the inner pipe 34 and the outer pipe 36 is formed by butting ends of a rectangular plate material on each other and by being welded by tungsten inert gas (TIG) welding or the like, and may be welded by the TIG welding or the like on the inner peripheral surface thereof to secure a bracket or the like. In this case, each of the inner pipe 34 and the outer pipe 36 includes a welded portion 38 extending in a direction in which an axis thereof extends. Accordingly, the welded portion 38 produced on the outer pipe 36 is exposed to ammonia, that is corrosive.

When the outer pipe 36 is welded from the outside thereof, as illustrated in FIG. 5, grain boundaries of the welded portion become coarse on the inner peripheral surface in which a welding temperature is low, while the grain boundaries become fine on the outer peripheral surface in which the welding temperature is high. Since the welded portion 38 with the coarse grain boundaries has a random atomic arrangement comparing with that of the welded portion 38 with the fine grain boundaries, intergranular corrosion may easily occur.

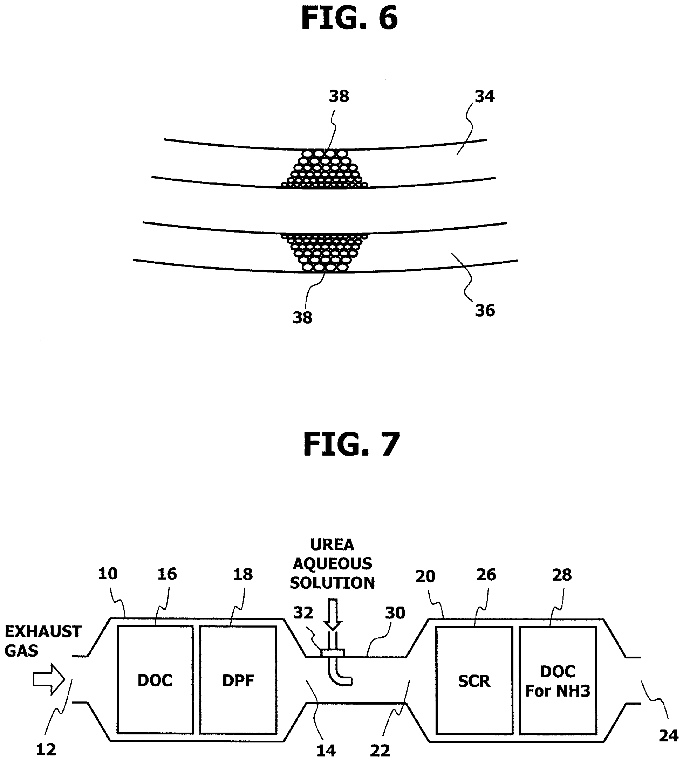

Thus, by welding the outer pipe 36 from the inside thereof, as illustrated in FIG. 6, the grain boundaries can be produced so that the grain boundaries become fine on the inner peripheral surface in which the welding temperature is high, while the grain boundaries become coarse on the outer peripheral surface in which the welding temperature is low. Furthermore, since the grain boundaries of the welded portion 38 on the inner peripheral surface of the outer pipe 36 can be made finer, the atomic arrangement can be put in order, and accordingly, the corrosion resistance of the inner peripheral surface, which may be exposed to ammonia at high concentration, can be improved, so that occurrence of corrosion can be reduced.

Here, as a welding method of the inner pipe 34 and the outer pipe 36, the TIG welding may be employed, to produce a high-quality, beautiful weld bead (trace of a welding pass).

As illustrated in FIG. 7, the exhaust gas purification apparatus may be obtained by aligning in a straight line the first casing 10, in which the DOC converter 16 and the DPF 18 are placed, and the second casing 20, in which the SCR converter 26 and the oxidation catalytic converter 28 are placed. Furthermore, as the exhaust gas purification apparatus, at least the SCR converter 26 may be provided therein. Still further, the welding method is not limited to the TIG welding, and may be any arc welding, such as metal inert gas (MIG) welding or metal active gas (MAG) welding.

### REFERENCE SIGNS LIST

- 10: First casing
- 16: DOC converter
- 18: DPF
- 20: Second casing
- 26: SCR converter
- 28: Oxidation catalytic converter
- 30: Communication pipe
- 32: Injection nozzle
- 34: Inner pipe
- 36: Outer pipe
- 38: Welded portion

## Claims

1. An exhaust gas purification apparatus comprising:
a selective catalytic reduction converter (26) which is disposed in an exhaust pipe of an engine and that selectively reduces and purifies nitrogen oxide contained in exhaust gas upon being supplied with ammonia generated from a urea aqueous solution; and
an injection nozzle (32) that supplies by injection the urea aqueous solution on an exhaust gas upstream side of the selective catalytic reduction converter (26),
wherein at least a part of the exhaust pipe located between the injection nozzle (32) and the selective catalytic reduction converter (26) has a double-pipe structure including an inner pipe (34) and an outer pipe (36), each of which has a welded portion (38),
wherein the inner pipe (34) and the outer pipe (36) are formed by butting ends of a rectangular plate material on each other and by being welded,
wherein the welded portion (38) of the inner pipe (34) and of the outer pipe (36) is extending in a direction in which an axis thereof extends;
**characterized in that**
the welded portion (38) of the outer pipe (36) is produced by welding performed from an inside of the outer pipe (38).

2. The exhaust gas purification apparatus according to claim 1, wherein the welding comprises tungsten inert gas welding.

3. The exhaust gas purification apparatus according to claim 1, further comprising an oxidation catalytic converter (28) disposed on an exhaust gas downstream side of the selective catalytic reduction converter (26) and that oxidizes ammonia.

4. The exhaust gas purification apparatus according to claim 1, further comprising a diesel particulate filter (18) disposed on the exhaust gas upstream side of the selective catalytic reduction converter (26) and that collects and removes particulate matter contained in the exhaust gas.

5. The exhaust gas purification apparatus according to claim 4, further comprising a diesel oxidation catalytic converter (16) disposed on an exhaust gas upstream side of the diesel particulate filter (18) and that oxidizes nitrogen monoxide contained in the exhaust gas to nitrogen dioxide.

6. A method for increasing corrosion resistance of an exhaust gas purification apparatus in which at least a part of an exhaust pipe located between a selective catalytic reduction converter (26), that selectively reduces and purifies nitrogen oxide contained in an exhaust gas upon being supplied with ammonia generated from a urea aqueous solution, and an injection nozzle (32), that supplies by injection the urea aqueous solution on an exhaust gas upstream side of the selective catalytic reduction converter, has a double-pipe structure including an inner pipe (34) and an outer pipe (36), each of which has a welded portion (38),
wherein the inner pipe (34) and the outer pipe (36) are formed by butting ends of a rectangular plate material on each other and by being welded,
wherein the welded portion (38) of the inner pipe (34) and of the outer pipe is (36) extending in a direction in which an axis thereof extends, **characterized in that** the method comprises the step of producing the welded portion (38) of the outer pipe (36) by welding performed from an inside of the outer pipe (36).

7. The method for increasing corrosion resistance of the exhaust gas purification apparatus according to claim wherein each of the inner pipe (34) and the outer pipe (36) is welded by tungsten inert gas welding.

## Patentansprüche

1. Abgasreinigungsvorrichtung, die umfasst:
einen selektiven Reduktionskatalysator (26), der in einem Auspuffrohr eines Motors angeordnet ist und der im Abgas enthaltenes Stickoxid beim Zuführen von Ammoniak, das aus einer wässrigen Harnstofflösung erzeugt wird, selektiv reduziert und reinigt; und
eine Injektionsdüse (32), die durch Injektion die wässrige Harnstofflösung an einer stromaufwärts gelegenen Abgasseite des selektiven Reduktionskatalysators (26) zuführt,
wobei wenigstens ein Teil des Auspuffrohrs, das sich zwischen der Injektionsdüse (32) und dem selektiven Reduktionskatalysator (26) befindet, einen Doppelrohraufbau mit einem inneren Rohr (34) und einem äußeren Rohr (36) hat, von denen jedes ein geschweißtes Teil (38) hat,
wobei das innere Rohr (34) und das äußere Rohr (36) gebildet werden, indem die Enden eines rechteckigen Plattenmaterials aneinander gestoßen und indem sie verschweißt werden,
wobei sich das geschweißte Teil (38) des inneren Rohrs (34) und des äußeren Rohrs (36) in eine Richtung erstreckt, in die sich deren Achse erstreckt;
**dadurch gekennzeichnet, dass**
das geschweißte Teil (38) des äußeren Rohrs (36) durch Schweißen hergestellt wird, das von der Innenseite des äußeren Rohrs (36) durchgeführt wird.

2. Abgasreinigungsvorrichtung nach Anspruch 1, wobei das Schweißen Wolfram-Inertgas-Schweißen umfasst.

3. Abgasreinigungsvorrichtung nach Anspruch 1, die des Weiteren einen Oxidationskatalysator (28) umfasst, der an einer stromabwärts gelegenen Abgasseite des selektiven Reduktionskatalysators (26) angeordnet ist und der Ammoniak oxidiert.

4. Abgasreinigungsvorrichtung nach Anspruch 1, die des Weiteren einen Dieselpartikelfilter (18) umfasst, der an der stromaufwärts gelegenen Abgasseite des selektiven Reduktionskatalysators (26) angeordnet ist und der im Abgas enthaltenen Feinstaub sammelt und entfernt.

5. Abgasreinigungsvorrichtung nach Anspruch 4, die des Weiteren einen Dieseloxidationskatalysator (16) umfasst, der an einer stromaufwärts gelegenen Abgasseite des Dieselpartikelfilters (18) angeordnet ist und der im Abgas enthaltenes Stickstoffmonoxid zu Stickstoffdioxid oxidiert.

6. Verfahren zur Erhöhung der Korrosionsbeständigkeit einer Abgasreinigungsvorrichtung, in dem wenigstens ein Teil des Auspuffrohrs, das sich zwischen dem selektiven Reduktionskatalysator (26), der im Abgas enthaltenes Stickoxid beim Zuführen von Ammoniak, das aus einer wässrigen Harnstofflösung erzeugt wird, selektiv reduziert und reinigt, und einer Injektionsdüse (32) befindet, die durch Injektion die wässrige Harnstofflösung an einer stromaufwärts gelegenen Abgasseite des selektiven Reduktionskatalysators zuführt, einen Doppelrohraufbau mit einem inneren Rohr (34) und einem äußeren Rohr (36) hat, von denen jedes ein geschweißtes Teil (38) hat,
wobei das innere Rohr (34) und das äußere Rohr (36) gebildet werden, indem die Enden eines rechteckigen Plattenmaterials aneinander gestoßen und indem sie verschweißt werden,
wobei sich das geschweißte Teil (38) des inneren Rohrs (34) und des äußeren Rohrs (36) in eine Richtung erstreckt, in die sich deren Achse erstreckt;
**dadurch gekennzeichnet, dass**
das Verfahren den Schritt zum Herstellen des geschweißten Teils (38) des äußeren Rohrs (36) durch Schweißen umfasst, das von der Innenseite des äußeren Rohrs (36) durchgeführt wird.

7. Verfahren zur Erhöhung der Korrosionsbeständigkeit einer Abgasreinigungsvorrichtung nach Anspruch 6, wobei das innere Rohr (34) und das äußere Rohr (36) durch Wolfram-Inertgas-Schweißen geschweißt werden.

## Revendications

1. Appareil d'épuration des gaz d'échappement comprenant:
un convertisseur de réduction catalytique sélectif (26) qui est disposé dans un tuyau d'échappement d'un moteur et qui réduit et purifie de façon sélective de l'oxyde d'azote contenu dans les gaz d'échappement après avoir été alimenté avec de l'ammoniaque produite à partir d'une solution aqueuse d'urée; et une buse d'injection (32) qui fournit par injection la solution aqueuse d'urée sur un côté amont des gaz d'échappement du convertisseur de réduction catalytique sélectif (26),
dans lequel au moins une partie du tuyau d'échappement située entre la buse d'injection (32) et le convertisseur de réduction catalytique sélectif (26) présente une structure à double tuyau comprenant un tuyau intérieur (34) et un tube extérieur (36), dont chacun possède une partie soudée (38),
dans lequel le tube intérieur (34) et le tube extérieur (36) sont formées par des extrémités en butée d'un matériau de plaque rectangulaire l'une sur l'autre et par soudage,
dans lequel la partie soudée (38) du tube intérieur (34) et du tube extérieur (36) s'étend dans une direction dans laquelle s'étend son axe;
**caractérisé en ce que**
la partie soudée (38) du tube extérieur (36) est réalisée par soudage effectué à partir de l'interne du tube extérieur (38).

2. Appareil d'épuration des gaz d'échappement selon la revendication 1, dans lequel le soudage comprend le soudage au gaz inerte tungstène.

3. Appareil d'épuration des gaz d'échappement selon la revendication 1, comprenant en outre un convertisseur catalytique d'oxydation (28) disposé sur un côté aval des gaz d'échappement du convertisseur de réduction catalytique sélectif (26) et qui oxyde l'ammoniaque.

4. Appareil de purification des gaz d'échappement selon la revendication 1, comprenant en outre un filtre à particules diesel (18) disposé sur le côté amont des gaz d'échappement du convertisseur de réduction catalytique sélectif (26) et qui recueille et élimine la matière particulaire contenue dans les gaz d'échappement.

5. Appareil de purification des gaz d'échappement selon la revendication 4, comprenant en outre un convertisseur catalytique d'oxydation (16) disposé sur un côté amont des gaz d'échappement du filtre à particules diesel (18) et qui oxyde en dioxyde d'azote, le monoxyde d'azote contenu dans les gaz d'échappement.

6. Procédé pour augmenter la résistance à la corrosion d'un appareil d'épuration des gaz d'échappement, dans lequel au moins une partie d'un tuyau d'échappement situé entre un convertisseur de réduction catalytique sélectif (26), qui réduit et purifie de manière sélective des oxydes d'azote contenus dans des gaz d'échappement lorsqu'il est fourni avec l'ammoniaque produit à partir d'une solution aqueuse d'urée, et une buse d'injection (32) qui fournit par injection la solution aqueuse d'urée sur un côté amont des gaz d'échappement du convertisseur de réduction catalytique sélectif, possède une structure à double tube comprenant un tube intérieur (34) et un tuyau extérieur (36), dont chacun a une partie soudée (38),
dans lequel le tube intérieur (34) et le tube extérieur (36) sont formés par des extrémités en butée d'un matériau de plaque rectangulaire l'une sur l'autre et par soudage,
dans lequel la partie soudée (38) du tube intérieur (34) et du tube extérieur (36) s'étend dans une direction dans laquelle s'étend son axe,
**caractérisé en ce que**
le procédé comprend les phases consistant à:
produire la partie soudée (38) du tube extérieur (36) par soudage effectué à partir de l'interne du tube extérieur (36).

7. Procédé pour augmenter la résistance à la corrosion de l'appareil d'épuration des gaz d'échappement selon la revendication 6, dans lequel chacun du tuyau intérieur (34) et du tuyau extérieur (36) est soudé par le soudage au gaz inerte tungstène.
